# NEUE EUROPÄISCHE PATENTSCHRIFT

(11) **EP 2 515 017 B2**
(45) Veröffentlichungstag und Bekanntmachung des Hinweises auf die Entscheidung über den Einspruch: **24.04.2019**
(45) Hinweis auf die Patenterteilung: 19.11.2014
(21) Anmeldenummer: 12159239.8
(22) Anmeldetag: 13.03.2012
(51) Int. Cl.: F16L 11/08, D04B 1/22

(54) **Schlauch zur Führung von Fluiden**
Hose for conveying fluids
Tuyau souple destiné au transport de fluides

(30) Priorität: 21.04.2011 DE 202011005577 U
(43) Veröffentlichungstag der Anmeldung: 24.10.2012
(73) Patentinhaber: REHAU AG + Co, 95111 Rehau (DE)
(72) Erfinder: Ebert, Carola, 95032 Hof (DE); Hübner, Christian, 95466 Neunkirchen am Main (DE); Goldstein, Jörg, 95028 Hof (DE); Beyer, Klaus, 95111 Rehau (DE)

(56) Entgegenhaltungen:
- EP-A1- 0 201 114
- EP-A1- 0 527 512
- EP-A2- 1 780 458
- EP-A2- 1 855 042
- WO-A1-2006/000735
- WO-A1-2010/131216
- WO-A2-2007/144831
- WO-A2-2007/144858
- DE-A1-102008 037 417
- DE-U1- 20 010 082
- GB-A- 195 234
- GB-A- 712 047
- GB-A- 747 726
- GB-A- 747 732
- US-A- 1 352 740
- US-A- 3 725 192
- US-A- 5 691 030
- US-A1- 2002 112 770
- US-A1- 2008 072 984
- US-B1- 6 242 095
- "Coating of technical textiles"; "Par. 8" In: Horrocks A.R.; Anand S.C.: "Handbook of technical textiles,", 2005, Woodhead Publishing Limited ISBN: 1-85573-385-4
- "Coating", Wikipedia , Retrieved from the Internet: URL:https://en.wikipedia.org/wiki/Coating# Spraying
- "Rubber cement", Wikipedia , Retrieved from the Internet: URL:https://en.wikipedia.org/wiki/Rubber_c ement
- "220X Adhesive, Lord technical data", Chemlok , Retrieved from the Internet: URL:http://www.lord.com/Documents/Technica l%2OData%2oSheets/DS3185.pdf
- "Plastic materials and articles intended to come into contact with food", COMMISSION REGULATION (EU) No 10/2011 Official Journal of the European Union, 14 January 2011 (2011-01-14), pages 1-89, XP055378921, Retrieved from the Internet: URL:http://eur-lex.europa.eu/legal-content /EN/TXT/PDF/?uri=CELEX:32011R0010&from=EN [retrieved on 2017-05-02]
- "Knit and wrap reinforcement" In: "Hose Handbook 7 edition", 2003, The rubber Manufactures Association Inc., XP055378925, page 23,

## Beschreibung

Die Erfindung betrifft einen Schlauch zur Führung von Fluiden gemäß Oberbegriff des Patentanspruches 1.

Armierte Schläuche sind im Stand der Technik hinlänglich bekannt. Sie werden beispielsweise zum Transport von Fluiden im allgemeinen Industriebereich, im Automobilbereich, z.B. als Druckschläuche für Kraftfahrzeuge, oder aber auch für Trinkwasser sowie zum Transport von Wasser in der gewerblichen oder privaten Gartenbewirtschaftung eingesetzt.

Armierte Schläuche sind beispielsweise aus der DE-OS 34 08 251 oder auch der DE-OS 29 38 833 bekannt. Bei den in diesen Schriften beschriebenen Diagonalarmierungen sind Armierungselemente um die das Fluid führende Schlauchschicht gewickelt oder geflochten, ohne dass die sich kreuzenden Armierungselemente miteinander verkettet sind. Derartige fadenarmierte Schläuche besitzen den Nachteil, dass sie zum Abknicken neigen, sofern ein gewisser Verlegeradius unterschritten wird. Unter Zug verschließt sich der Schlauch dann immer mehr, bis er schließlich unbrauchbar wird. Die EP 0 527 512 A1 zeigt einen Schlauch mit einer netzförmigen Armierung, bei dem die Armierungsfasern parallel bzw. senkrecht zur Schlauchachse ausgerichtet sind.

Aus der DE 200 10 082 U1 ist ein Schlauch mit einer maschenartigen Armierung bekannt. Maschenware entsteht als Gestricke oder Gewirke, bei dem die Fäden in maschenförmigen Schleifen (Maschen) ineinander verschlungen bzw. miteinander verstrickt werden. Bei dem vorbekannten armierten Schlauch bilden die Armierungselemente entlang der Schlauchlängsachse eine Zick-Zack-Linie, wobei voneinander beabstandete, benachbarte Armierungselemente an deren Verbindungspunkten mindestens einmal ineinander verschlungen sind. Eine derartige Armierung erlaubt dem Schlauch ein gewisses "Atmen" bei Druckbeaufschlagung. Die Armierung weist aufgrund ihres Aufbaus analog zur Gestalt eines herkömmlichen Maschendrahtzauns eine sehr offene Struktur auf, sodass der entsprechende Schlauch eine hohe Flexibilität besitzt und somit nicht so leicht abknickt. Zudem öffnet sich der Schlauch unter Zug wieder und erlaubt so das Weiterfließen des Fluides. Problematisch bei diesem Stand der Technik ist allerdings, dass die Anpassung der Armierung an die Bedingungen des jeweiligen Einsatzfalls nur eingeschränkt möglich ist.

Aus der GB 747 732, der US 2008/0072984 A1, der EP 1 780 458 A2 und der WO 2010/131216 A1 sind Schläuche mit den Merkmalen des Oberbegriffs des Patentanspruchs 1 bekannt.

Der Erfindung liegt die Aufgabe zugrunde, einen Schlauch mit den eingangs beschriebenen Merkmalen anzugeben, dessen Armierung sich flexibel an den jeweiligen Anwendungsfall anpassen lässt.

Erfindungsgemäß wird diese Aufgabe durch die Merkmale im Kennzeichnungsteil des Patentanspruchs 1 gelöst.

Die Armierungselemente können aus textilen (z.B aus Baumwoll- und/oder Kunstfasern) und/oder metallischen und/oder keramischen und/oder polymeren Fäden aufgebaut sein, wobei mindestens zwei unterschiedliche Materialien der vorgenannten Art miteinander kombiniert werden, also z.B. Armierungselemente aus textilen Fäden mit Armierungselementen aus keramischen Fäden oder z.B. metallische Fäden mit Armierungselementen aus polymeren Fäden. Als polymere Materialien kommen insbesondere Polyester oder PVC in Betracht. Im Rahmen der Erfindung liegt auch die Verwendung von Mineral-, z.B. Glas-, und / oder Kohlenstoff- und / oder Aramid- und / oder Basaltfasern als Fadenmaterial, ggf. in Kombination mit einem oder mehreren der zuvor genannten Fadenmaterialien. Durch die Kombination unterschiedlicher Werkstoffe für die Armierungselemente entsteht ein entsprechend hybrider Aufbau der Armierungsschicht, sodass über diese Materialwahl beispielsweise der Armierungsgrad, die Flexibilität, die Knickstabilität und auch die Herstellkosten sehr variabel gestaltet werden können.

Gemäß einer Ausführungsform des hybriden Aufbaus der Armierungsschicht weisen alle Armierungselemente einen hybriden Aufbau mit einer Innenschicht und einer Außenschicht aus unterschiedlichen Werkstoffen auf. Erfindungsgemäß wird bereits in einem einzelnen Armierungselement der Hybridgedanke realisiert, indem dieses einen mehrschichtigen Aufbau mit unterschiedlichen Materialien besitzt. Im Rahmen der Erfindung liegt es, zwischen Innenschicht und Außenschicht einen Haftvermittler aufzubringen. Erfindungsgemäß dient die Außenschicht zur Verschweißung der Armierungselemente an deren Verbindungspunkten und/oder zur Verschweißung der Armierungsschicht mit der inneren und/oder äußeren Schlauchschicht. Durch die beschriebene Verschweißung wird die Lage der einzelnen Armierungselemente zueinander fixiert bzw. eine innige Verbindung der Armierungsschicht zur inneren und/oder äußeren Schlauchschicht hergestellt, sodass es während des Gebrauchs des Schlauchs nicht zu einer unerwünschten Verschiebung der Armierungsstruktur gegenüber den Schlauchschichten bzw. der Armierungselemente innerhalb der Armierungsschicht kommt. Hierdurch ist eine zuverlässige Funktion der Armierungsschicht auch nach einer längeren Gebrauchszeit des Schlauches gewährleistet. Die Verschweißung wird zweckmäßigerweise durch eine entsprechende Erwärmung der Komponenten sichergestellt, beispielsweise durch die in der inneren Schlauchschicht unmittelbar nach deren Extrusion noch vorhandene Wärme. Die Außenschicht der Armierungselemente kann PVC enthalten. In einer besonderen Ausführungsform der Erfindung besteht die Außenschicht aus PVC. Analog hierzu kann die innere Schlauchschicht und/oder die äußere Schlauchschicht Kunststoff, vorzugsweise PVC enthalten. Gemäß einer besonderen Ausführungsform der Erfindung bestehen eine oder beide vorgenannten, vorzugsweise extrudierten, Schlauchschichten aus Kunststoff, insbesondere PVC. Ferner kann die innere und/oder die äußere Schlauchschicht aus einem durchsichtigen, also transparenten oder transluzenten, Material bestehen. Eine durchsichtige äußere Schlauchschicht ermöglicht die zusätzliche Nutzung der Armierungsschicht als designerisches Element des Schlauches.

Ganz allgemein kann/können neben den genannten Schichten zwischen innerer und äußerer Schlauchschicht eine oder mehrere weitere Schlauchschicht/en vorgesehen sein.

In Analogie zum Stand der Technik aus DE 200 10 082 U1 können die Armierungselemente entlang der Schlauchlängsachse eine Zick-Zack-Linie bilden, wobei einander benachbarte Armierungselemente an deren Verbindungspunkten mindestens einmal ineinander verschlungen sind. Hierbei kann die Struktur der Armierungsschicht insbesondere analog zur Gestalt eines üblichen Maschendrahtzauns ausgebildet sein.

Zweckmäßigerweise weist die Armierungsschicht von den Armierungselementen gebildete Diagonallinien auf, welche vorzugsweise mit der Schlauchlängsachse einen Winkel von 44 bis 64°, vorzugsweise 50 bis 58° einschließen. Besonders bevorzugt ist hier ein Armierungswinkel von ca. 54°, der dem so genannten Neutralwinkel bei Schlaucharmierungen bezüglich Längs- zu Querausdehnung bei einer Druckbeaufschlagung entspricht. Alternativ hierzu liegt es jedoch auch im Rahmen der Erfindung, dass die Armierungselemente längs und quer zur Schlauchlängsachse verlaufen, also analog zur bereits erwähnten EP 0 527 512 A1 im Wesentlichen parallel und senkrecht zur Schlauchachse. Diese Gitternetzstruktur ist für bestimmte Anwendungsbereiche vorteilhaft.

Der vorstehend beschriebene erfindungsgemäße Schlauch kann für unterschiedlichste Anwendungen eingesetzt werden. Generell ist er für verschiedenste industrielle Einsatzzwecke geeignet und ist vor allem in Kraftfahrzeugen als Druckschlauch oder aber auch für den Trinkwassertransport sowie zum Transport von Wasser in der gewerblichen oder privaten Gartenbewirtschaftung einsetzbar.

Im Folgenden wird die Erfindung anhand einer lediglich ein Ausführungsbeispiel darstellenden Zeichnung ausführlich erläutert. Es zeigen schematisch:
- Figur 1: eine Querschnittdarstellung eines Schlauchs,
- Figur 2: eine Ausführungsform der Erfindung und
- Figur 3: den Schnitt A-A in Figur 2.

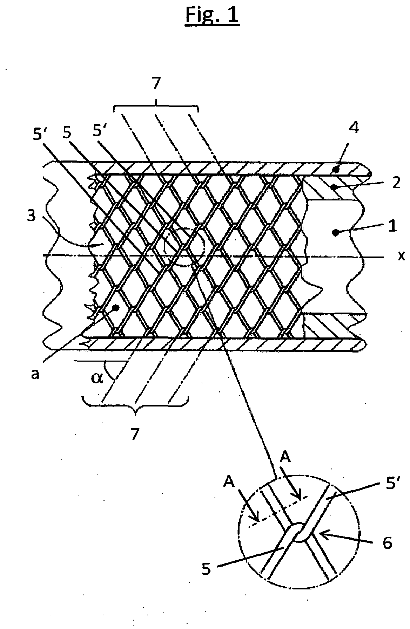

Figur 1 zeigt einen Schlauch zur Führung von Fluiden mit einer vom Fluid 1 beaufschlagten extrudierten inneren Schicht 2 aus, vorzugsweise weichgemachtem, Kunststoff, einer Armierungsschicht 3 und einer die Armierungsschicht 3 umschließenden, schützenden äußeren Schlauchschicht 4 aus, vorzugsweise weichgemachtem, Kunststoff, die ebenfalls im Extrusionsverfahren hergestellt wird. Die Armierungsschicht 3 weist mehrere Armierungselemente 5, 5' auf, die maschenartig miteinander verbunden sind. Die Armierungsschicht 3 kann - je nach Größe des freien Schlauchquerschnitts und Anwendungsfall - beispielsweise aus 8 bis 20 Armierungselementen 5, 5' aufgebaut sein, vorzugsweise 12 bis 16. In Figur 1 sind einander benachbarte Armierungselemente 5, 5' aus unterschiedlichen Werkstoffen gefertigt. So besteht das Armierungselement 5 aus einem Polyesterfaden, während das Armierungselement 5' aus einem Metallfaden besteht. Der Figur 1 ist ferner zu entnehmen, dass die Armierungselemente 5, 5' entlang der Schlauchlängsachse x eine Zick-Zack-Linie bilden, wobei einander benachbarte Armierungselemente 5, 5' an deren Verbindungspunkten 6 mindestens einmal ineinander verschlungen sind (s. insbes. vergrößerten Ausschnitt der Fig. 1). Im Ausführungsbeispiel weist die Armierungsschicht 3 eine offene Struktur mit rautenförmigen Durchlässen a analog zur Gestalt eines üblichen Maschendrahtzauns auf. Hierbei sind die jeweils benachbarten Armierungselemente 5, 5' miteinander verkettet. Das Armierungselement 5 ist sowohl mit dem Armierungselement 5' in Fig. 1 oberhalb als auch mit dem Armierungselement 5' in Fig. 1 unterhalb unmittelbar verbunden, jedoch nicht mit weiteren Armierungselementen. Der Figur 1 ist ferner zu entnehmen, dass die Armierungsschicht 3 von den Armierungselementen 5, 5' gebildete Diagonallinien 7 aufweist, welche mit der Schlauchlängsachse x einen Winkel von ca. 54°, dem so genannten Neutralwinkel bezüglich Längs- zu Querausdehnung bei Druckbeaufschlagung, einschließt.

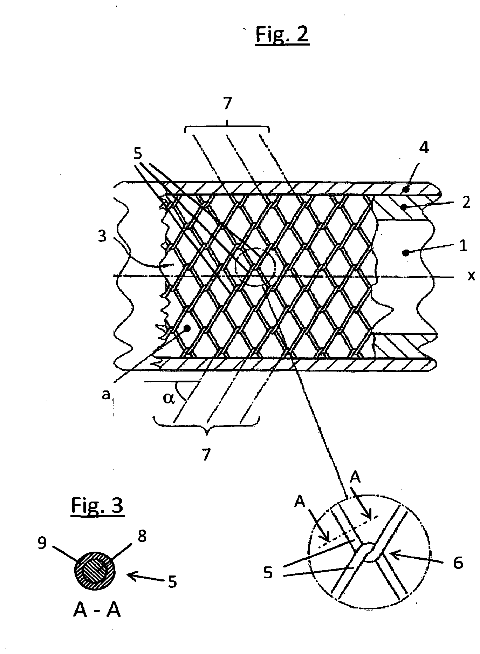

Bei dem Ausführungsbeispiel gemäß den Figuren 2 und 3 weisen die Armierungselemente 5 einen hybriden Aufbau mit einer Innenschicht 8 und einer Außenschicht 9 aus unterschiedlichen Werkstoffen auf. Im Ausführungsbeispiel ist die Außenschicht 9 als Imprägnierung der aus einem Polyesterfaden bestehenden Innenschicht 8 ausgebildet. Die Außenschicht 9 dient zur Verschweißung der Armierungselemente 5 an deren Verbindungspunkten 6 und zur Verschweißung der Armierungsschicht 3 mit der inneren Schlauchschicht 2 und der äußeren Schlauchschicht 4. Zu diesem Zweck sind sowohl die Außenschicht 9 als auch die innere Schlauchschicht 2 und die äußere Schlauchschicht 4 aus PVC gefertigt.

Es versteht sich, dass die unterschiedliche Ausbildung der Armierungselemente 5, 5' gemäß Figur 1 auch mit dem hybriden Aufbau eines einzelnen Armierungselementes 5 gemäß Figur 2 kombiniert werden kann.

## Patentansprüche

1. Schlauch zur Führung von Fluiden mit
- einer vom Fluid (1) beaufschlagten inneren Schlauchschicht (2),
- einer Armierungsschicht (3) und
- optional mindestens einer die Armierungsschicht (3) umschließenden äußeren Schlauchschicht (4),
wobei die Armierungsschicht (3) mindestens zwei Armierungselemente (5, 5') aufweist, die maschenartig miteinander verbunden sind, und wobei die Armierungsschicht (3) einen hybriden Aufbau aus mindestens zwei unterschiedlichen Werkstoffen aufweist, **dadurch gekennzeichnet, dass** die Armierungselemente (5, 5') einen hybriden Aufbau mit einer Innenschicht (8) und einer die Innenschicht (8) vollständig umschließenden Außenschicht (9) aus unterschiedlichen Werkstoffen aufweisen, so dass bereits in einem einzelnen Armierungselement (5, 5') der Hybridgedanke realisiert wird,
dass über die aus Kunststoff bestehende Außenschicht (9) eine Verschweißung der Armierungselemente (5, 5') an deren Verbindungspunkten (6) hergestellt ist, und
dass die Außenschicht (9) als Umspritzung, Imprägnierung oder Umsprühung der Innenschicht (8) ausgebildet ist.

2. Schlauch nach Anspruch 1, **dadurch gekennzeichnet, dass** die Armierungselemente (5, 5') aus unterschiedlichen Werkstoffen bestehen.

3. Schlauch nach Anspruch 1 oder 2, **dadurch gekennzeichnet, dass** die Armierungselemente (5, 5') aus textilen und/oder metallischen und/oder keramischen und/oder polymeren Fäden aufgebaut sind.

4. Schlauch nach einem der Ansprüche 1 bis 3, **dadurch gekennzeichnet, dass** die Außenschicht (9) zur Verschweißung der Armierungsschicht (3) mit der inneren Schlauchschicht (2) und/oder der äußeren Schlauchschicht (4) dient.

5. Schlauch nach einem der Ansprüche 1 bis 4, **dadurch gekennzeichnet, dass** die Außenschicht (9) PVC enthält.

6. Schlauch nach einem der Ansprüche 1 bis 5, **dadurch gekennzeichnet, dass** die innere Schlauchschicht (2) und/oder die äußere Schlauchschicht (4) aus extrudiertem Kunststoff, vorzugsweise PVC, bestehen.

7. Schlauch nach einem der Ansprüche 1 bis 6, **dadurch gekennzeichnet, dass** die Armierungselemente (5, 5') entlang der Schlauchlängsachse (x) eine Zick-Zack-Linie bilden, wobei einander benachbarte Armierungselemente (5, 5') an deren Verbindungspunkten (6) mindestens einmal ineinander verschlungen sind.

8. Schlauch nach einem der Ansprüche 1 bis 7, **dadurch gekennzeichnet, dass** die Armierungsschicht (3) von den Armierungselementen (5, 5') gebildete Diagonallinien (7) aufweist, welche vorzugsweise mit der Schlauchlängsachse (x) einen Winkel (α) von 44 bis 64°, insbesondere 50 bis 58°, einschließen.

## Claims

1. A hose for conveying fluids having
- an inner hose layer (2) impinged by the fluid (1),
- a reinforcing layer (3) and
- optionally at least one outer hose layer (4) surrounding the reinforcing layer (3),
wherein the reinforcing layer (3) has at least two reinforcing elements (5, 5') that are in mesh-like connection with each other and wherein the reinforcing layer (3) has a hybrid construction composed of at least two different materials, **characterised in that** the reinforcing elements (5, 5') have a hybrid construction with an inner layer (8) and, completely surrounding the inner layer (8), an outer layer (9) composed of different materials such that the hybrid concept is implemented even in a single reinforcing element (5, 5'),
**in that** a welding of the reinforcing elements (5, 5') at their connection points (6) is achieved by way of the outer layer (9) consisting of plastic, and
**in that** the outer layer (9) is configured as an extrusion coating, impregnation or spray coating of the inner layer (8).

2. The hose according to claim 1, **characterised in that** the reinforcing elements (5, 5') consist of different materials.

3. The hose according to claim 1 or 2, **characterised in that** the reinforcing elements (5, 5') are made up of textile and/or metallic and/or ceramic and/or polymeric filaments.

4. The hose according to one of claims 1 to 3, **characterised in that** the outer layer (9) is used for welding the reinforcing layer (3) to the inner hose layer (2) and/or the outer hose layer (4).

5. The hose according to one of claims 1 to 4, **characterised in that** the outer layer (9) contains PVC.

6. The hose according to one of claims 1 to 5, **characterised in that** the inner hose layer (2) and/or the outer hose layer (4) consist(s) of extruded plastic, preferably PVC.

7. The hose according to one of claims 1 to 6, **characterised in that** the reinforcing elements (5, 5') form a zigzag line along the longitudinal hose axis (x), wherein adjacent reinforcing elements (5, 5') are intertwined at least once at their connection points (6).

8. The hose according to one of claims 1 to 7, **characterised in that** the reinforcing layer (3) has diagonal lines (7) formed by the reinforcing elements (5, 5'), which are preferably at an angle (α) of 44 to 64°, in particular 50 to 58°, to the longitudinal hose axis (x).

## Revendications

1. Tuyau souple destiné au transport de fluides comprenant
- une couche de tuyau souple intérieure (2) exposée au fluide (1),
- une couche de renforcement (3) et
- facultativement au moins une couche de tuyau souple extérieure (4) entourant la couche de renforcement (3),
la couche de renforcement (3) comportant au moins deux éléments de renforcement (5, 5'), qui sont reliés l'un à l'autre à la manière de mailles, et la couche de renforcement (3) présentant une composition hybride à partir d'au moins deux matériaux différents,
**caractérisé en ce que** les éléments de renforcement (5, 5') présentent une composition hybride avec une couche intérieure (8) et une couche extérieure (9) entourant complètement la couche intérieure (8) en matériaux différents, de sorte que le concept d'hybridation est déjà réalisé dans un élément de renforcement (5, 5') individuel,
**en ce qu'**un soudage des éléments de renforcement (5, 5') est réalisé en leurs points de liaison (6) par le biais de la couche extérieure (9) constituée de matière plastique, et
**en ce que** la couche extérieure (9) est réalisée sous la forme d'un enrobage, d'une imprégnation ou d'une pulvérisation de la couche intérieure (8).

2. Tuyau souple selon la revendication 1, **caractérisé en ce que** les éléments de renforcement (5, 5') sont constitués de matériaux différents.

3. Tuyau souple selon la revendication 1 ou 2, **caractérisé en ce que** les éléments de renforcement (5, 5') sont conçus en fils textiles et/ou métalliques et/ou céramiques et/ou polymères.

4. Tuyau souple selon l'une des revendications 1 à 3, **caractérisé en ce que** la couche extérieure (9) sert au soudage de la couche de renforcement (3) avec la couche de tuyau souple intérieure (2) et/ou la couche de tuyau souple extérieure (4).

5. Tuyau souple selon l'une des revendications 1 à 4, **caractérisé en ce que** la couche extérieure (9) contient du PVC.

6. Tuyau souple selon l'une des revendications 1 à 5, **caractérisé en ce que** la couche de tuyau souple intérieure (2) et/ou la couche de tuyau souple extérieure (4) sont constituées de matière plastique, de préférence du PVC, extrudée.

7. Tuyau souple selon l'une des revendications 1 à 6, **caractérisé en ce que** les éléments de renforcement (5, 5') forment une ligne en zigzag le long de l'axe longitudinal (x) du tuyau souple, des éléments de renforcement (5, 5') voisins étant entrelacés l'un dans l'autre au moins une fois en leurs points de liaison (6).

8. Tuyau souple selon l'une des revendications 1 à 7, **caractérisé en ce que** la couche de renforcement (3) comporte des lignes diagonales (7) formées par les éléments de renforcement (5, 5'), qui forment de préférence avec l'axe longitudinal (x) du tuyau souple un angle (α) de 44 à 64°, en particulier de 50 à 58°.
